# EUROPEAN PATENT APPLICATION

(11) **EP 1 808 787 A1**
(43) Date of publication of application: **18.07.2007**
(21) Application number: 07000569.9
(22) Date of filing: 12.01.2007
(51) Int. Cl.: G06F 17/30

(54) **Deep enterprise search**

(30) Priority: 17.01.2006 US 333961
(71) Applicant: SAP AG, 69190 Walldorf (DE)
(72) Inventor: Moore, Dennis B., Hillsborough, CA 94010 (US); Beringer, Jörg, Los Altos, CA 94022 (US)
(74) Representative: Müller-Boré & Partner Patentanwälte

(57) **Abstract**

Methods and apparatuses provide a search tool to conduct a deep enterprise search for business objects related to a query received at a search interface. The search tool identifies an object type and an argument, and searches the enterprise via one or more enterprise services for one or more business objects related to the argument of the search string. Results can be particularly formatted to be appropriate for the context and device with which the search was requested.

## Description

### FIELD

Embodiments of the invention relate to data searching, and more particularly to searching for data within an enterprise.

### BACKGROUND

Search algorithms used by many search engines (e.g., those operated by GOOGLE of Mountain View, California, or YAHOO! of Sunnyvale, California) can produce a large number of "hits," or results. The search algorithms are typically considered to be "fuzzy" search algorithms (i.e., that search for strings with similarities), and similar technology is often used in enterprise searching. In a corporate workplace context, a fuzzy search algorithm can be very time consuming and may produce a small result set.

In some cases advanced searching options are provided to a user to increase a result set; however, advanced options typically require a user to invest time/effort in learning the syntax and entering the appropriate queries. Often such advanced searches are provided in the context of specific tools or devices, which may be inapplicable to other tools or devices. Thus, a user is traditionally required to adapt to different search tools among different devices.

Traditional search tools may also suffer the problem of having limited ability to access or use a selected item of a result set. In a user context, a user is often more interested in performing an operation or action upon an item, rather than simply searching for information. Thus, the lack of sufficient interactive capabilities enabled by a search tool with the found items generally provides performance not appropriate for a corporate work context in which the user intent is to act upon an item. In an enterprise search, the users frequently know what kind of item they would like to find, but are traditionally unable to search for multiple item types related by content rather than file name.

### SUMMARY

A search tool receives a user query at a user query interface. The user query requests a search or identification of one or more business objects related to a particular argument or search string. The search tool includes a parser that parses the query and determines an object classification associated with the query, the classification to be used, at least in part, to identify an enterprise service to conduct the search. If the enterprise service returns results from a search, the business objects can be displayed in a visualization tailored to the context of the query.

A search tool can provide improved results over traditional search methods by focusing on an object type defined by a command-based user query or derived from work context. The search tools can further leverage the structure of the objects (the information sought) by mapping search terms to appropriate attributes, in contrast to operating only on unstructured text. Additionally, the search tool can associate information related to a user action, object type, work context, etc. (e.g., advertisements, related search commands). Results of the search may also be presented in a format that is adapted to one or more contexts (e.g., query context, work context, object type, device context). Results can further be presented to support follow-up actions by the user on an object by using enterprise services for operations or object relationships for offering related search information. Additionally, the overall architecture of the mechanisms used to provide the search may allow embedding of the search functionality in existing and familiar user interfaces, and in multiple different device types, rather than using complex search applications.

### BRIEF DESCRIPTION OF THE DRAWINGS

The following description includes discussion of various figures having illustrations given by way of example of implementations of embodiments of the invention. The drawings should be understood by way of example, and not by way of limitation.

**Figure 1** is a block diagram of an embodiment of an enterprise search system architecture.

**Figure 2** is a block diagram of an embodiment of an enterprise search system architecture including a query interface and query handling module.

**Figure 3** is a block diagram of an embodiment of an enterprise system architecture with a query interface at a client device and a parser and formatter at an enterprise server.

**Figure 4** is a block diagram of an embodiment of a user display with a search input interface and a search result interface.

**Figure 5** is a flow diagram of an embodiment of performing an enterprise search.

### DETAILED DESCRIPTION

As used herein, references to one or more "embodiments" are to be understood as describing a particular feature, structure, or characteristic included in at least one implementation of the invention. Thus, phrases such as "in one embodiment" or "in an alternate embodiment" appearing herein describe various embodiments and implementations of the invention, and do not necessarily all refer to the same embodiment. However, they are also not necessarily mutually exclusive. Descriptions of certain details and implementations follow, including a description of the figures, which may depict some or all of the embodiments described below, as well as discussing other potential embodiments or implementations of the inventive concepts presented herein. An overview of embodiments of the invention is provided below, followed by a more detailed description with reference to the drawings.

An enterprise search tool enables a user to search an enterprise for business objects. The search tool may enable a user to search for many types of items, for example, an invoice or an employee, and forward the query automatically to the correct service or services to find results. As used herein, a "search" tool refers to any tool described herein for receiving a query and identifying and/or finding business objects in response to the query. The label "search" tool is not to be understood as limiting, but applies to a tool for performing searches, or other operations related to performing an action requested in a query. For example, an action may be for opening, editing, creating, or simply finding a business object. In one sense, a "search" may be an end action (e.g., find a business object), or may be a component part of another operation (e.g., search for a business object and open it). The term "search" will be used herein for simplicity of description, but the descriptions should be understood to being potentially applicable to other actions/operations in lieu of or in addition to searching.

A search tool as described herein provides a simplified contextual command language for searching structured business objects with capabilities to generate outputs tailored to the type of query and form factor of the device. The search tool can provide a consistent, customizable search interface, and a standard procedure for searching in a corporate context. As used herein, a business object refers generally to a construct of data and a methodology regarding how to interact with the data. A structured business object refers then to a business object that has a particular structure of data and/or a particular methodology associated with the data regarding how to interact with the data.

The search tool provides a pluggable way of finding desired results to a user request for business objects. The search tool may include, or work in conjunction with an extensible parser that reads the query and directs it to the appropriate service on the network, or outside the network, if desired. The directing of the query can depend, at least in part, on the object type. For example, in one implementation, a query for news about a customer could be sent to GOOGLE, or another public search engine. The directing of the query may also depend on a type of customer for which the user is querying. For example, a search indicating a customer "Georgia" may access a geographical service. A search indicating an employee number may be sent to a human resources (HR) service. A query indicating an invoice number or a purchase order number could be sent to an accounting service. Any of these queries can be entered into a single search interface and directed to the appropriate service.

### Syntax/Formatting

The search tool may include a particular syntax/format, or expect queries of a particular format. In one embodiment the format is <Action Type> <Business Object Type> <Argument>. Other formats are possible, and other ordering of these particular fields is also possible. An action can include one or more operations to perform with respect to the business object input in the query. For example, the actions can include search, subscribe, open, create, or other actions. Search refers to a seek/find function to provide a list of objects that include a relationship to the query. Subscribe refers to a function to, for example, enlist for a listserv, request participation in a group or activity, sign up for future content related to the subject of the query, etc. Open refers to a function to load the business object or a local copy of the business object on a requesting device, or a device from which a request is initiated. An "open" action may refer to any loading of whole or a portion of a business object for interaction with the object. Create refers to a function to generate a business object. A create action placed in the search tool may enable the system to perform a check to verify that the business object does not already exist, or result in a conflict with an existing business object. The examples above of action types do not represent an exhaustive list, and should not be interpreted restrictively, nor assumed to be exclusive. In one embodiment the tool may default to "search" if no action type field is included.

The types of business object can be as varied as desired within an enterprise. For example, business object types may include customer, employee, product, department, competitors, invoice, worklist, etc. In one embodiment the search tool may default to a type of object currently selected from context of the work environment and/or the other search fields. In one embodiment the absence of a business object type can open a search to any related business object, regardless of type. In some implementations, object type can be inferred, as discussed in more detail below.

Regarding the argument, the argument may include a search string. In one embodiment certain strings may be forbidden (e.g., a business object type keyword). The argument may thus include any search term, qualifier, pattern, input value, etc., valid for the context in which the query is entered.

In one embodiment the search tool includes a suggestion function, auto-provide, and/or other "push" mechanism. For example, if a query fails to include an argument, or includes an invalid argument, an error message may be displayed. Additionally, the search tool may provide a message such as "did you mean 'client' instead of 'cleint'," etc. The suggestion mechanism may be synonym-driven, and/or responsive to particular scenarios. In one embodiment key phrases may be employed with both "long" and "short" versions, for example, 'co' for 'cost,' 'cu' for 'customer,' etc. A system administrator may be able to create synonyms or translations for the search objects through an administration form, or by sending in a query of a particular format. One possible format may be: "synonym [object name] [another object name]."

Another form of suggestion can be to provide auto-complete or auto-fill elements to the query. For example, if an employee object is selected, employee number may be automatically added. The definition of employee within the system may allow searching by first or last name and/or ID number. The system could then auto-provide the search type and the correct syntax for the search. For example, if searching for employees by first name and last name, the system could auto-provide employee number. In other cases, a parser of the search tool (described in more detail below) can indicate an error.

In one embodiment a user may request help from the system, for example, by inputting "Help: <object type>." The search syntax could be suggested/provided and available via the object type (e.g., customer). Additionally, search syntax could be integrated with scripting languages (e.g., PHP, PERL, NUKE). The language could be embeddable and with results assigned into the enterprise and beyond into a scripting language.

In one embodiment the input of a query may include dragging and dropping by a user. For example, if a user has a particular business object currently available, and needs further information regarding the business object, or needs to link to related business objects, the user could drag the current business object into the search tool. If the search tool can determine the work context of the user (described in more detail below), the search tool can search for related business objects based simply upon the "dropped" business object, without the user having to input anything further.

### Search Tool Actions

The search tool takes a query, parses the query, and performs one or more actions on the parsed query. For example, the search tool may forward the query to one or more services. The services may include any services available within an enterprise. In one embodiment the parser sends the query to multiple services concurrently or substantially concurrently, or sends the query to multiple services to be searched concurrently or substantially concurrently. Searching can thus be performed in parallel. Additionally, once a first query has been accepted in the query interface, another query may be entered, even prior to the return of results on the first query. In one embodiment the system allows a deep search into the enterprise, and also allows searching for related ad-words. Additionally, concurrent searches could be performed for a programmer book on an online retailer, and also concurrently searching for potential programming employees. The search tool could run a single search against multiple preferred suppliers (e.g., to find a discount price).

As described above, multiple actions can be performed, besides search, or instead of search. Thus, a query can result in a subscription to one or more results, as an example. In one embodiment multiple actions may be performed in a single search. For example, a subscribe and an open action could be performed in relation to a particular newsletter. In addition to performing multiple searches or multiple actions, searches can also be aggregated, for example, in order to take advantage of group purchasing discounts. Having consistent or standard syntax in searches can enable the system to more easily aggregate searches.

Additional actions may include enterprise match searches where an administrator/manager can determine which features of intranet the employees are using, determine whether the employees are doing the work they are supposed to be doing, and so forth. Results

The search tool contains a formatter that can provide syntax to the query interface. Additionally, the formatter can understand results, including a context to which the results will be returned. In one embodiment the format of results is associated with the object type searched, with a work context in which the query is made, etc. As used herein, a work context may refer to an application in use by the user, a project currently being worked on by the user, permissions of a user, etc. In one embodiment the search tool supports multi-channel searching. Thus, a query interface may be applicable to different contexts (e.g., a Web-based search interface, an email/electronic messaging-based interface, an interface for a handheld device/PDA (personal digital assistant), etc.). The device-type requesting the results may support a different result-type than other devices. For example, one device may support graphic results, while another only supports text. In one context or application, certain results may be more appropriate than others. The formatter can understand the context to which the results will be returned, and format the results accordingly.

Furthermore, results can be ranked. Examples of ranking systems include ranking/ordering the results by popularity, by usage (selected most frequently), by sponsorship, etc.

### Partnerships

In one embodiment a business partnership or relationship can be furthered through the use of a search tool as described herein. Partnership includes joint, or at least cooperative, development with respect to the search tool. If one partner develops or employs the tool in its enterprise, cooperative development may encourage business between the partners. Partners can plug their own query entry devices into the system to utilize the search tool, plug their own objects into the applications of their partner(s), etc. Partners may be able to direct an existing parser entry to a different search service, and even plug in their own search service in the parser for existing or new objects. Additionally, a partner could plug in its own formatting for any particular kind of an object list, or for any particular kind of a visualizer, and create its own visualizer.

Alternatively, a partner can plug things into its existing application. For example, a company like AUTODESK of San Rafael, California could plug its ability to search for computer-assisted-drawing (CAD) drawings into the tools of a project management software company (e.g., SAP AG of Walldorf, Germany), or plug in the ability to search for a BOM (bill of materials) from SAP into its CAD tools.

In one embodiment a partnership could exist in the form of attaching ad-objects to concepts in an enterprise database. The ad-objects could be attached algorithmically and added to concepts in a database, e.g., "vendor." Ad-objects can be associated to specific objects for example, to "expert," or to specific queries (e.g. "expert JAVA developer"), as well as to specific user contexts. Many possible examples exist, including, but not limited to: executing a transaction; viewing a report; specific user roles (e.g., purchasing clerk, CEO); employees who have traveled in the past month, who are based in Palo Alto, are hourly employees; customers who have not purchased in the past month, or who are also employees; suppliers who are not quality certified, with whom a threshold amount of purchasing is/is not met; specific usage models, for example, email queries, always-on queries; specific system contexts such as which search service is online, when a user gets an empty result set, when the system is under heavy load; specific query histories such as the first time a query is made for a particular object type; etc. As used herein, email refers to any type of electronic messaging service message including email. Ad-object functionality could be used for many other things; as one example, just-in-time training.

For objects and instances of objects there could be specific ad-objects that could be attached to those objects. In one example, a specific instance of an ad-object might be associated with a specific search task (e.g., search a particular database). Thus, ad-objects could be associated with specific objects, a specific object instance, specific queries, specific user context (e.g., a user group executing a specific transaction, or any user viewing the object for a report), etc.

Furthermore, an ad-object could be used for advertising third-party or internal products, services, or knowledge, and not necessarily only for advertising specific products or services. For example, for anyone looking at a report for the first time, an associated ad-object could contain information for interpreting the report. The ad-object information could be located, for example, in a sidebar.

Ad-objects may be related to certain contexts or specific usage modes. For example, a particular ad-object may be visible to a user when browsing the Web, but not when using email.

In one embodiment receiving the null set (no results) to a query may be quite important for ad-objects. An ad-object may give access to some particular thing, for which the system shows no results. Receiving the null set could indicate a particular error or condition, for example, because a user's access rights were insufficient to see the desired material, because of a security issue, because no data is present, etc. If an ad-object exists where no results are returned, a user could use the ad-objects object to ask someone (employee) to create the data to make it available to anyone else who searches.

Along with ad-objects may come personalization settings to allow the enterprise to block certain kinds of ads either by opting out of the advertising mechanism, or by opting out of specific areas of advertising (e.g., prevent employees from seeing job ads, or specific ads for a direct competitor).

In addition to partnering between enterprises, ad-objects could provide a mechanism for requesting access to data not available to indicate that information should be made available, to indicate a suggestion regarding a particular query/subject to a system administrator, etc. In addition to making the suggestion, a user could then subscribe temporarily or permanently to follow changes regarding the subject matter suggested in the ad-object.

### Personalization

The search tool can be personalized or customized to a particular query or work context. The personalization can occur on several levels. On a first level, the query interface can be customized to match a working context or user preferences. For example, searches can be limited to appropriate search term types for a user's activities. For example, if a user is working on customer invoices, then the main selections could be as follows: customer, invoice, purchase order, with other object possibilities shown under a "more" or similar selection that could show a full list of objects. The limited set of objects (including the last, which gives access to all objects) is dependent on the work context. In one embodiment, if the work context includes information on object types referenced by the current application, only these objects (and closely related objects) may be shown in the current context (by default). The default can be overridden by the user, who can save the ability to show specific additional (or fewer, or different) default objects in the future in this work context. If the work context does not include information on object types referenced by the current application, the search tool can "recognize," or match data in the application to known terms, and use the matched terms to "guess" the types of objects to show.

Personalization could also include interfacing by usage statistics, which can be analyzed for information about what to suggest next to a particular user. Statistics that may be collected include, but are not limited to information for: manual queries, always on searching, programmatic (called by a program through API or service rather than manually by a user) searches, and subscribed queries. Statistics may include number of users, number of queries, users executing most queries, number of queries executed in a window (within a short period of time indicating a "search session" where a user explores data by executing repeated queries, which are presumably different queries), number of query windows per day by user, length of time since last query, queries executed by always-on as compared to user-initiated queries, context of a query (e-mail, toolbar, application (statistics about which application, etc.)), queries returning errors, queries returning no results, queries returning large result sets, amount of CPU (central processing unit) time and other resources consumed by queries, amount of user time waiting for results, times when search services were on- or off-line, new users, frequency of identical queries, queries with subscriptions, queries executed by automated search, queries executed by programmatic search, queries executed from a suggestion link (e.g., 'you can also') or an error link (e.g., 'did you mean'), query results "activated" (clicked on, or otherwise selected or invoked).

Personalization may also occur at the level of the formatter, which can return results based on context and/or preferences. For example, individual users can be "blocked" from all or some object searches for security and/or administrative purposes (e.g., stopping a Trojan horse, a worm, a security breach, or DOS (denial of service) attack). In another example, a particular query pattern may indicate that someone is trying to download a database (e.g., too many queries), which could then be stopped by denial of results. If results are allowed, the results can be formatted for output to a particular device (multi-channel searches) or application/work context, etc.

Personalization can also occur at the activity level of searching, where the search tool can be an "on or off' feature. The search tool may allow a type of search which would turn on a contextual search, or new data sources such as HOOVERS, LEXIS/NEXIS, WESTLAW, commodities prices, a stock streamer, etc. Privacy can be configurable to comply with local laws and/or to comply with enterprise issues.

### Always On

In one embodiment the search tool is enabled with an always on feature. While a user is working, search can always be working in the background and firing off searches that might be relevant to what the user is doing. An always on search feature could operate in some ways like smart tags. For example, if a user types in a last name and first name, the search tool can check for employees, or customers, with that name. The always on feature could be in a particular area of the screen, or may operate with a popup when an apparent perfect match (algorithm-driven) is found. Results from an always-on search can be moved from a "search context" to a "work context" by a click, pop-up menu, drag-and-drop, and/or by relevant "fields" in the work context taking on the values or suggesting the values from the selected search result(s).

The search tool as described herein can be implemented in a contextual search manner, enabling the system to know the type of work currently being done, which enables the search tools to limit the scope of a search, or assume a default. Knowledge of the context also enables generating results for a drag and drop search.

An always-on search mechanism can employ aspects of data mining, finding useful information related to the user's work context by constantly querying the various search services for matches to items in the user's work context. However, not all users will want an always-on search enabled. The search tool can include one or more preference settings for where search runs on a workspace, when it runs, etc. The search tool can provide auto completion, and/or a combination box that can limit results to appropriate search term types for the specific user's activities. For example, if a user is working on customer invoices, the search tool can limit business object types to customer, invoice, and purchase order. Other business objects could be included as preferred selections for a particular context, and other entries could be added. Besides results, the search tool can also return related actions, along with the results. For example, in a search for the team of a manager, the search tool can search for employee details, employee number, and employee salary.

An always-on search can operate in any application or system. In a case where an application is in use that is fully modeled, the search tool can determine from application metadata the kinds of objects available, how close the available objects are to a task or screen currently being worked on, etc. Always-on searching can be performed whenever a context is open, and not just when a user is typing. The search could be producing contextually related results to the tasks a user is performing.

### General Implementation

In one embodiment a query interface is provided that includes one or more fields or boxes for a user to enter a query. Alternatively, the query can be made via email rather than in a window or query box on a user screen. In one embodiment a query syntax is: action, object type, argument. The user can enter each field of the query or use defaults. The action can be search or find, retrieve, etc. If a user leaves a field empty, a default can be used.

The query entry and the viewer can be browser-based. The visualization and query entry elements may be run on a local client, or in a browser. In one embodiment the visualization can be provided via a visualization agent as described in U.S. Patent Application No. 11/181,644, entitled "Methods for Enterprise-Level Data and Process Access and Presentation," filed July 13, 2005. Briefly, the visualization agent of the above-referenced patent application provides visualizations in any number of combinations of context, access type, navigation type, and business object type.

The search tool includes a formatter and parser, which can be installed on a user's local client, or could run on a server. The search server can run anywhere on an enterprise network, and can be connected as a web service. In one embodiment all of the elements of the search tool could be on a user's client. The query and the viewer implementation can be with many interfaces: e-mail, handheld/PDA/smartphone, an HTML/WEBDYNPRO interface, etc.

For implementation of the search services, the search tool can use a variety of different ways to connect the parsers for searching, for example, extensible markup language (XML) interfaces, remote function calls (RFCs), Web calls, local application program interfaces (APIs), etc.

The security of the search tool can be assumed to be as secure as anything else in the environment. Besides the security of the environment, the search system could provide additional security, for example, by limiting in the formatter the results that can be displayed on different kinds of devices. Email is traditionally less secure than direct network connections, which means there may be reason to limit the capabilities allowed for an email search.

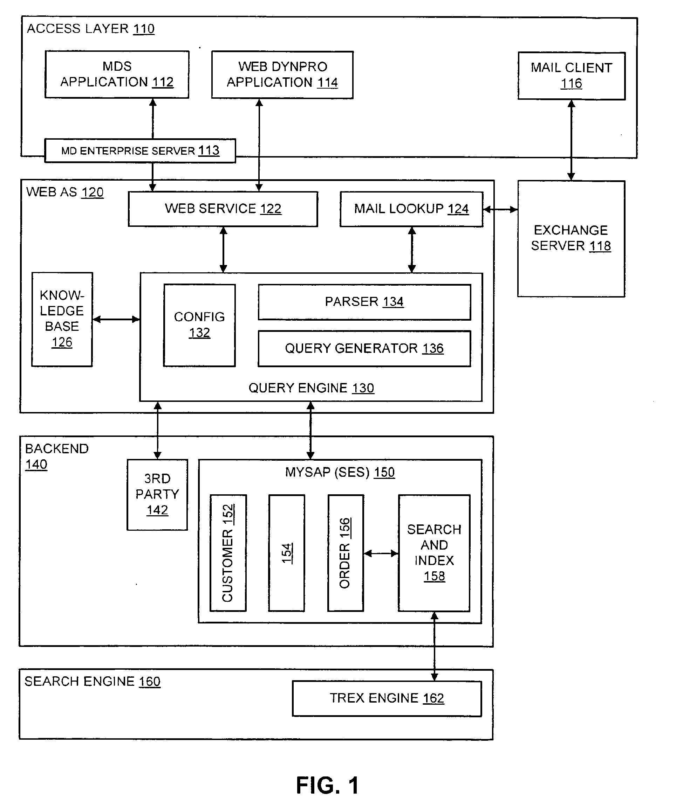

Figure 1 is a block diagram of an embodiment of an enterprise search system architecture. A search system architecture may include various layers or functional levels to implement the search system. The search system architecture of Figure 1 may apply to any embodiment of a search system described herein. In one embodiment access layer 110 represents a layer of control and functionality to provide access to the search to a user. Access layer 110 can thus be considered to have and/or provide interfacing to a user. Interfacing with a user may include hardware elements to interface, for example, a keyboard/keypad, mouse or other pointer control, monitor (e.g., LCD (liquid crystal display), touchscreen, etc.), voice control (e.g., microphone, speaker), etc. Interfacing with the user may further include software elements that operate to provide functionality to hardware interface components. Interface components may refer to hardware, software, and/or a combination of these with which a search system receives input from a user and/or passes output to a user.

Access layer 110 may include various modules, which represent software and hardware with which to provide functionality to the software. For example, access layer 110 includes MDS (mobile device server) application 112. MDS, as used herein, refers to a server or service that interfaces a device to a mobile device. As used herein, interface refers to any level of interconnection or interaction. Interfacing with a user or device thus refers to any operation or action that includes receiving input from, or sending output to or preparing to send output to, the user or device. A mobile device includes any type of mobile unit, including handheld computers/computing devices, PDAs, smart phones, etc. In one embodiment a mobile device enabled to operate on the BLACKBERRY service of RESEARCH IN MOTION (RIM) of Waterloo, Ontario, Canada. MDS application 112 can be an application within the mobile device that enables a user to access a search tool as described herein. In one embodiment MDS application 112 is a scaled-down version of an application that can operate on a laptop or desktop computer, meaning an application that includes core functionality and may be developed particularly to operate on the more limited hardware of a mobile device. MDS application 112 may operate through MD enterprise server 113, which represents hardware and software to tie MDS connectivity to an enterprise network. Thus, one network (the enterprise) is made to operate in conjunction with another, separate network (the mobile device network). The difference in networks may be the distinguishing factor between a mobile device (e.g., a cell phone) and a wireless device of the enterprise (e.g., a laptop).

Access layer 110 may include an application through which to access the search tool on a device within the enterprise network. For example, Web Dynpro application 114 can represent an application with connectivity enabled by WEB DYNPRO of SAP, or similar technology of SAP or some other technology provider. Web Dynpro application 114 can provide an environment, for example, within a browser, through which a user can enter queries and receive results. Web Dynpro application 114 refers to any embodiment of an application on an enterprise device that provides an interface to a search tool.

Access layer 110 may also include mail client 116, which represents a module that enables a search to be made via email. For example, rather than providing a search interface application view on a computing device, the system may be able to receive an email with the search request. Mail client 116 could then generate search information to send to a searching sub-system, similar to how Web Dynpro application 114 may pass search information to and from a searching sub-system. In one embodiment mail client 116 accepts a query with a search syntax in a subject line and/or the body of the email, which acts as a query according to any embodiment discussed herein. Thus, receiving a query may include receiving the query via email. Mail client 116 is coupled to exchange server 118, or any other type of email server on an enterprise. As used herein, coupled refers to any type of physical, electrical, and/or communicative coupling or interconnecting or interfacing. Exchange server 118 may in turn be coupled to mail lookup 124 of Web application server (AS) 120. Mail lookup 124 generally provides the ability of Web AS 120 to receive and send information via email.

MDS application 112 and Web Dynpro 114 may be coupled to one or more Web services 122, which represent functionality or interconnectivity of Web AS 120. Web service 122 may provide logic with which Web AS 120 can provide interaction with one or more components of access layer 110. Web service 122 and mail lookup 124 are coupled to query engine 130. Query engine 130 represents one or more components that enable Web AS 120 to provide searching functionality to components of access layer 120. In one embodiment Web AS 120 includes, or has access to, knowledge base 126, which enables Web AS 120 to obtain enterprise data and/or information related to a user, a user work context, enterprise business objects, etc.

Query engine 130 includes configuration 132, which may provide initialization and/or personalization information to specify how query engine 130 can or should interact with one or more users. Parser 134 provides query engine 130 the ability to parse queries received. Parsing refers to any function or operation or series of functions or operations to obtain information from a search string, or otherwise determine from a query what operation is being requested in the query. Thus, parser 134 can distinguish fields of the query from each other. Parser 134 may determine from a query that a user is requesting a particular type of business object to be identified/search for, etc.

Query generator 136 represents one or more components that take the information from parser 134 and create working searches from the information. The working search may be code that can direct a particular enterprise service to perform operations. In one embodiment query generator 136 determines which of multiple enterprise services could be used to find business objects related to a particular query. Thus, query engine 130 may be able to automatically map queries to enterprise services that can provide a search of the appropriate aspects of the enterprise for results (business objects that match the query).

Query engine 130 may be coupled from Web AS 120 to one or more components of backend 140. Backend 140 refers to hardware and/or software that operates an enterprise network. For example, backend 140 may include third (3rd) party component 142, which represents one or more components of a network that may be provided by a company other than the company providing the search interface and search tools. In one implementation, SAP services MYSAP (SES - Search Engine Service) 150 provides one example of a backend system.

MySAP 150 includes an example of an operation of a search tools according to what is described herein. MySAP 150 includes a framework to provide search for business objects (e.g., by object attribute values). In a customer order transaction, MySAP 150 may include customer object 152, order object 156, and any number of other objects 154. The objects can be searched and indexed by a search and index component 158. In one embodiment objects are registered prior to being searchable. If a new business object is to be searchable, the object may need to be registered for indexing. Once registered, the indexing can take place automatically, and the business object can be searched by MySAP 150. As objects are known (e.g., because of registering), different layouts can be defined to render matchlist or single hits in a manner to customize the usability of the search. Search and index component 158 may utilize search engine 160, and specifically TREX (for search and classification) engine 162 in one implementation. Other search engines or searching components/technologies are possible.

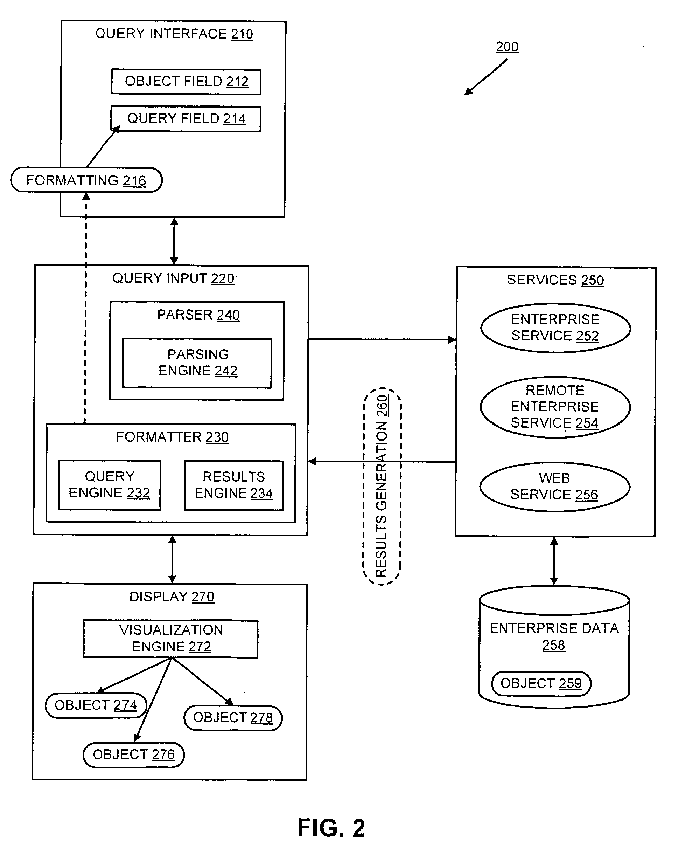

**Figure 2** is a block diagram of an embodiment of an enterprise search system architecture including a query interface and query handling module. System 200 represents a search system according to any embodiment described herein. Query interface 210 provides an access mechanism to allow a user to obtain results of a search. Query interface may be or include an electronic messaging system, a browser environment, a standalone application or function, etc. In one embodiment query interface 210 includes object field 212. Object field 212 represents an input field, a command line interface, a field of an electronic message, etc., in which a user can specify an object type for which to search. In one embodiment object field 212 includes a pull-down menu to provide options of potential object types to a user. Object field 212 may be customizable (e.g., in layout, in content, etc.) and/or adaptable (e.g., to a work context, operating environment, etc.). Query interface 210 may include a work context estimator and/or have access to a context determining mechanism to provide awareness or knowledge of a work context to object field 212. Thus, determining a work context may include query interface 210 and/or a mechanism coupled to or accessible to query interface 210 obtaining or determining a work context.

In one embodiment the options in a pull-down menu of object field 212 may be affected by a work context. For example, if a search is performed from a particular application, function, process, event, etc., the possible selection available for object field 212 may be adjusted according to the work context. As used herein, work context refers to the environment provided by an application, function, process, event, etc., by user information, by data metadata, by a process or project, etc. Thus, in a circumstance where a user is working on processing customer orders, the main selection of object types in object field 212 (e.g., customer, product, financials) may be different than if a user is working on project team selection (e.g., employee, department, schedule, projects). The user may be able to manually include a different object type, and/or select a general (e.g., "more... ") option within object field 212, and thus have access to search different objects. Although one example of a work context situation is presented, it will be understood that the work context dependence can obtain through any usage of the search tool, in any circumstance or application where the application allows for a user choice functionality (e.g., filling in a particular field, selecting among multiple choices, etc.).

Query field 214 represents a field, box, input area, etc., wherein a user can provide a query string or other query content. In one embodiment query field 214 includes a field within an electronic message. In another embodiment query field 214 includes a field or header within a message passed to a search tool (for example, from an always-on search routine). Query field 214 may have a specified preferred or mandatory syntax. Formatting 216 represents the fact that query field 214 may include a particular format or syntax. In one embodiment, formatting 216 is passed or provided, and/or required, by query input module 220. Formatting 216 may be provided to query field 214 similar to or as a guided process, for example, as a suggestion of queries, as a "did you mean" suggestion, as an error message, etc.

Query input module 220 receives and processes the query from query interface 210. Query input module 220 may include formatter 230 and parser 240. In one embodiment query input module 220 includes parser 240, and not formatter 230. Formatter 230 and parser 240 can exist independently of query input module 220, and may in some implementations be part of other elements shown in Figure 1. Formatter 230 provides formatting for query input and/or for results displays. Formatter 230 may include multiple functions or routines, and in one embodiment is separable into different components. For example, formatter 230 is shown with query engine 232 and results engine 234. Briefly, query engine 232 provides formatter 230 with the ability to verify formatting, provide syntax, and/or perform other operations with respect to query interface 210. Results engine 234 provides formatter 230 with the ability to provide the results of a search in an appropriate manner. Results engine 234 may provide results based on the query mechanism (e.g., email, browser environment, etc.), the results set (e.g., choose different visualizations if the results numbers are small), the user (e.g., based on preferences), the work context (e.g., fill in fields), etc. Query engine 232 and results engine 234 are not necessarily part of the same code or routine, and may interface with each other through function calls, programming interfaces, etc. Query input module 220 may be disposed within or otherwise be part of or execute on a user device. In one embodiment, query input module 220 or components of query input module 220 may exist external to a user device, for example, on a network server.

Query input module 220 may also include parser 240, which parses queries received from query interface 210, which in turn are received in one manner or another from a user. Parsing a query refers to performing one or more operations on the content that represents the query (e.g., a string of characters) to search for patterns (e.g., space delimiters, field delimiters, key words, particular characters, or any other delimiter) and determine the content that represent the query. Parser 240 includes parsing engine 242, which represents the ability and/or the routines of parser 240 to search through a query for recognizable characteristics, and/or determine fields to pass to a search mechanism.

Query input 220 is further coupled to one or more services 250, which represents various types of services that may be present in an enterprise network. In one embodiment services 250 reside in a network/enterprise server. Services 250 generally represent functions that can be performed on enterprise data or with respect to enterprise data, or with respect to one or more abilities of the network. For example, services 250 may include enterprise service 252, which represents functions that can be performed with respect to a local enterprise. A local enterprise refers to an enterprise to which the requestor (i.e., the user from which the query is generated) belongs, or of which the requestor is a part. A local enterprise may include one or more domains, domain servers, local area networks (LANs) whether wired or wireless, virtual LANs (VLANs), etc. An enterprise is local with respect to a server that generally provides access to a device of a user. Thus, even a remote device, or a mobile device, may be considered to have a local enterprise at least from the perspective that service is provided, and the user is native to the enterprise network.

A local enterprise may be in contrast to a remote enterprise, which represents an enterprise that is not local. A user is not natively associated with a remote enterprise, at least because the user normally obtains access and service, and support, from a different enterprise. In one embodiment a search tool is able to access one or more remote enterprise services 254 to perform searches with respect to a remote enterprise and/or obtain access to data from the remote enterprise. One example of access to remote enterprise service 254 may include a cooperative relationship between enterprises, e.g., with a grid trading network. A grid trading network generally enables users to access enterprise data and share functionality across separate enterprises. More information regarding grid trading networks may be found in US Patent Application No. 11/264,415 (Attorney Docket 6631.P040), entitled "Grid Processing in a Trading Network," US Patent Application No. 11/263,828 (Attorney Docket 6631.P050), entitled "Grid Processing Dynamic Screensaver," and US Patent Application No. 11/264,414 (Attorney Docket 6631.P051), entitled "Grid Processing User Tools," all filed October 31, 2005.

Services 250 may also include Web service 256, which represents one or more services that may provide access to one or more particular websites, or to the Internet in general. Note that parser 240 determines which of services 250 can/should perform searches with respect to the subject matter of the query. In one embodiment, parser 242 may determine that multiple services 250 are appropriate services with which to search for objects related to the content of the query. Thus, multiple of services 250 may be selected simultaneously, or substantially simultaneously (e.g., temporally proximate in time, selected by a single operation or routine, selected to execute in parallel, etc.) to perform a search for business objects. Note that the use of multiple of services 250 may signify the use of multiple enterprise services 252 and/or the use of disparate services (e.g., an enterprise service 252 and a remote enterprise service 254, etc.), or any combination.

Services 250 may be coupled to one or more mechanisms that provide enterprise data 258, and/or have access to enterprise data 258. Enterprise data 258 represents any type of object or other data, and should be interpreted broadly as inclusive of any type of business/enterprise object. In one embodiment services 250 will find object 259 related to the query. Enterprise data 258 represents data that may be local to a local enterprise, local to a remote enterprise, and/or be available (whether publicly or privately (e.g., through paid subscription)) on the Internet. Services 250 provide one or more results sets through results generation 260, which represents the work performed by services 250 to search for objects. Results may be formatted by formatter 220, as discussed above.

Query input module 220 may be coupled with display 270, which represents hardware and/or software for providing a display to a user. Display 270 receives formatted results and renders the results as formatted. Display 270 include visualization engine 272, which enables display 270 to display results for a search query. Visualization engine 272 may respond to commands from formatter 230, and/or may provide visualization according to a work mode, user preferences, the results set, etc. In one embodiment, visualization engine 272 provides a visualization according to the visualization agent described in U.S. Patent Application No. 11/181,644, entitled "Methods for Enterprise-Level Data and Process Access and Presentation," filed July 13, 2005.

Thus, display 270 may provide one or more objects for access by a user according to any type of link, smart tag, menu, icon, etc., in any visualization (e.g., charts, tables, graphs, lists, etc.). Visualization engine 272 is depicted showing objects 274-278, which represent results of a query received in query interface 210.

Techniques described herein can be performed by components that may include hardware, software, and/or a combination of these. Reference to modules may refer to components that include hardware, software, and/or a combination of these. Software to instruct a machine to implement the techniques herein, or software to use to manufacture a device to perform the techniques described herein may be provided via an article of manufacture by a machine/electronic device/hardware. An article of manufacture may include a machine accessible/readable medium having content to provide instructions, data, etc. The content may result in an electronic device or computing system performing various operations or executions described. A machine accessible medium includes any mechanism that provides (i.e., stores and/or transmits) information/content/instructions in a form accessible by a machine (e.g., computing device, electronic device, electronic system/subsystem, etc.). For example, a machine accessible medium includes recordable/non-recordable media (e.g., read only memory (ROM), random access memory (RAM), magnetic disk storage media, optical storage media, flash memory devices, etc.). The machine accessible medium may further include an electronic device having code loaded on a storage that may be executed when the electronic device is in operation. Thus, delivering an electronic device with such code may be understood as providing the article of manufacture with such content described above. Furthermore, storing code on a database or other memory location and offering the code for download (i.e., providing the code for access) over a communication medium may be understood as providing an article of manufacture with such content described above.

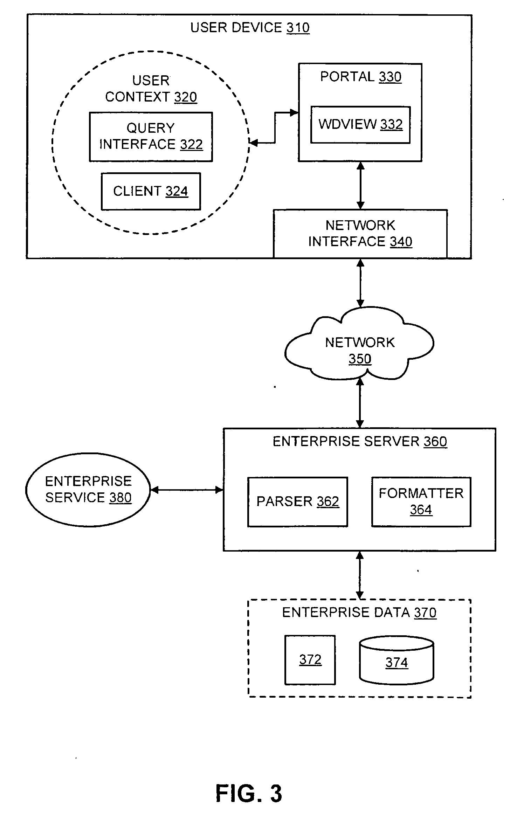

**Figure 3** is a block diagram of an embodiment of an enterprise system architecture with a query interface at a client device and a parser and formatter at an enterprise server. User device 310 represents any type of electronic device that may be part of a network (e.g., laptop computer, desktop, PDA, combination phone, etc.). User device 310 includes user context 320, which represents part or all of a work environment, the device type, the software and/or hardware platform on which user device 310 operates, user permissions and/or preferences, one or more applications, event, processes, etc., which are being executed on user device 310, etc. Within the context of user context 320, user device 310 may include query interface 322, which represents an access mechanism through which a user query may be made.

User context 320 may also include one or more clients 324, which represent software mechanisms executing on user device 310 to provide functionality and/or access to functionality on user device 310. One or more components of user context 320 (e.g., client 324) may interface with portal 330, which represents a mechanism for user device 310 to connect, create, or otherwise use any object or objects available within an enterprise. A portal as used herein refers to a single, controllable point of access. Portal 330 refers to an interface from the user device 310 to the enterprise network. The controllable nature of the access of portal 330 refers to the ability to set parameters or limits on the scope of functionality of the portal. Portal 330 may reference a single data object to allow access and/or visual representation of the object on the computing device. In one embodiment portal 330 is created from the SAP ENTERPRISE PORTAL 6.0 (SAP EP).

Portal 330 may include one or more WebDynpro (WD) views 332 (and/or iViews or type-able fields, depending on the implementation). WebDynpro view 332 may contain several iViews, each of which represents an interface mechanism to enable portal 330 to access the network. Either WebDynpro views and/or iViews may be used, or some comparable technology. For ease of description, and not by way of limitation, the description herein will generally refer to WebDynpro views. In one embodiment a WebDynpro view 332 having multiple iViews can be used. Thus, the technologies are also not necessarily mutually exclusive. iViews and/or WebDynpro views access and display data objects from a network. A WebDynpro view can enable a "type-able field" to allow input from a user. In one embodiment WebDynpro view 330 enables a query input interface to receive a query input. WebDynpro view 330 may include one or more function calls, routines, or sequences of instructions to cause certain operations in the computing device.

Portal 330 may operate through network interface 340, which represents the circuitry (e.g., a NIC or network interface card) and/or software through which component software of user device 310 connects to/accesses a network. Network interface 340 is coupled to network 350, which represents all or part of an enterprise network, and may include or be part of a grid trading network. Network 350 couples network interface 340 to enterprise server 360, which represents hardware and business logic to perform operations to serve data, route traffic, and/or perform other functions of a network. In one embodiment enterprise server 360 includes parser 362 and/or formatter 364, which represent a parser and formatter, respectively, according to any embodiment described herein.

Enterprise server 360 is coupled to and can access one or more elements of enterprise data 370, which elements are represented by 372 and 374, which may represent individual business objects or groups, data structures, tables, or databases or other stores of objects. As discussed previously, enterprise data 370 may be any variety of data, and thus, data elements 372-374 should be understood as broadly representing data, and not viewed in any way limiting the data types available to enterprise server 360. Enterprise server 360 may include or have access to one or more enterprise services 380. Enterprise service 380 here represents any type of service, whether local, remote, Web, etc.

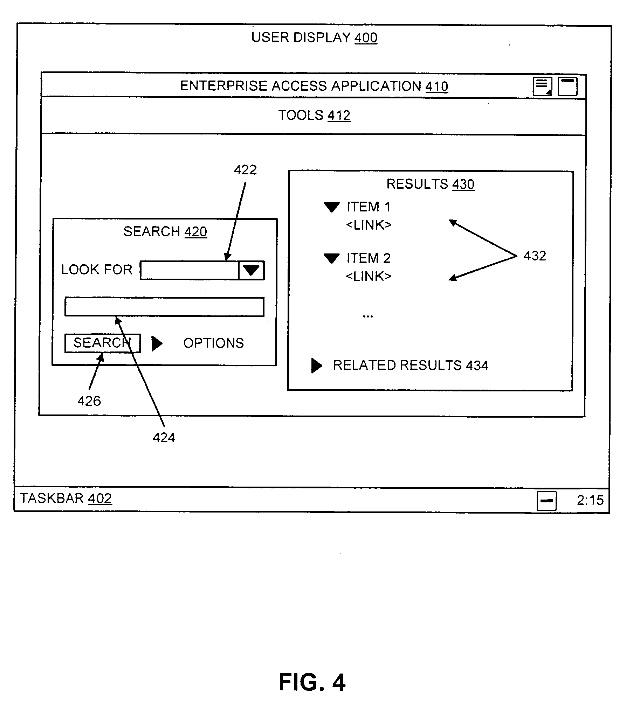

Figure 4 is a block diagram of an embodiment of a user display with a search input interface and a search result interface. User display 400 represents a display for any user device as previously mentioned. Note that the interfaces of user display 400 will change from device to device, but the may share many similarities. User display 400 will generally include taskbar 402, or some other navigational or function-selection mechanism. User display 400 includes enterprise access application 410, which may include or be provided by one or more portals, clients, etc. Application 410 may include one or more tools 412 available within the context of application 410. Tools 412 enable a user to perform operations within application 410 and/or manipulate data and/or navigate within or through data.

Within application 410, search 420 may be provided as a graphical display. Search 420 represents an example of a search tool according to any embodiment described herein. The layout of search 420 may differ from application to application, and even within an application, for example, based on user preferences. Search 420 is depicted with object selection field 422, which may be a pull-down menu, and/or may have a type-able field to enable a user to specify an object type. In one embodiment a default object type is suggested. The default may be provided via preferences or other settings, or may be the result of a determination of a context of application 410.

Search 420 may further include query entry field 424, which represents an entry box into which information can be provided. Entry field 424 may accept strings of different types, and may determine if a string is acceptable based at least in part on the information provided in other areas of search 420. For example, a user could input an entire search within entry field 424, including an object type. In another example, a user could input only the desired subject matter of a search, and specify an object type. In another example, a user could input only the desired subject matter, and the object type be inferred from context. In another example, a user may drag and drop an object into search 420, and specifically entry field 424. The dropping of the object into field 424 (i.e., the release of the object over or into the field area) may prompt a search for related material. Note that when referring to the dragging and dropping of the object, what is generally understood is an operation performed on a graphical representation of an object, or a word, or other concept within a graphical user interface of a user device.

In the case of query input via typing and/or selecting object types, selection tab 426 allows a user to indicate a query is complete, or that no more content will be provided. The selection of tab 426 may prompt the mechanisms discussed herein with respect to a search tool to parse and otherwise process/evaluate the user query and initiate the selection action on the argument term(s). In a case where a graphical representation (e.g., an icon, a "word" appearing on user display 410) is dropped into search 420, the release of the item into search 420 may initiate a search or other action.

After the services have determined whether or not results are available within the search area (e.g., a local enterprise), the services return the results, which are formatted and displayed as results 430. Results 430 may include items 1-N of "found" items related to the query in a list, in graphical format, or any other visualization technique. In one embodiment results 430 are displayed in a pop-up window within application 410. Thus, application 410 may continue to display work that was being performed by a user prior to the search, with a results pop-up overlaid over application 410. In one embodiment items 1-2 represents found items 432. Other items may be "found" that are considered to not match the query (e.g., a different object type, or objects related to a project but not the exact query, or ad-objects) to an extent to be considered to be found items 432. Such items may be displayed as related results 434. Each item 432 may include a link to the object, which can be accessed by the user via selection of the link.

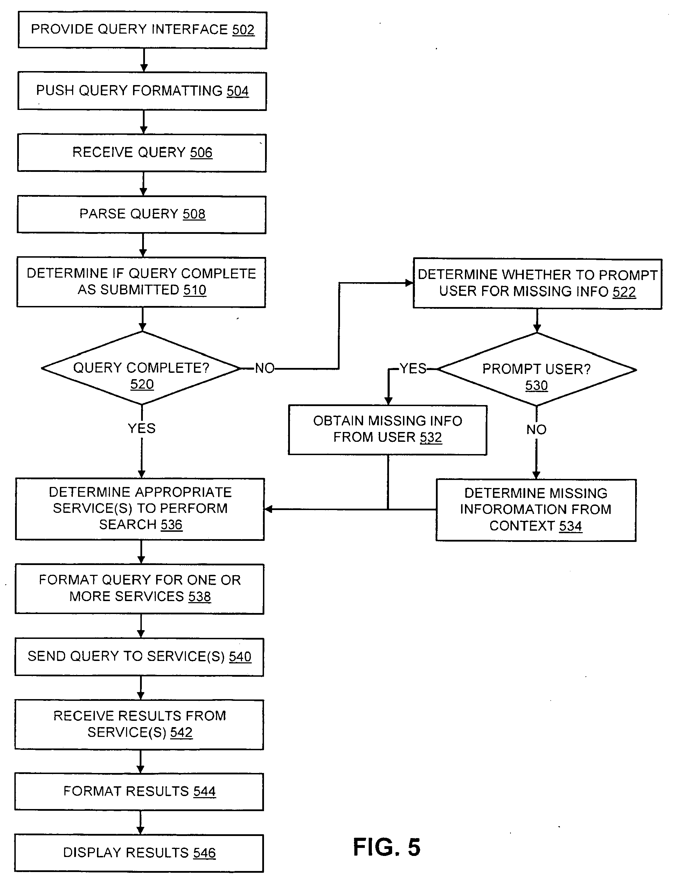

**Figure 5** is a flow diagram of an embodiment of performing an enterprise search. A system with a search tool provides a query interface, 502. The query interface can be any type of user interface, and may include graphical and/or textual components and/or input fields. The query interface can be any query interface described herein. In one embodiment a parser provides query formatting to the query interface, 504. The parser may provide formatting to ensure that a query is of a format able to be parsed/understood by the parser. Formatting is not necessarily provided to the query interface, even if the system is enabled to provide formatting. When a proper query is formed, the query is received at a parser, 506. The parser parses the query, 508, and determines if the query is complete as submitted, 510. The query may be sent with all fields of the query entered, or may leave certain fields to receive default or contextually-determined values.

If the query is not complete, 520, the parser may determine whether to prompt the user for missing information or content deemed to be missing from the query, 522. Prompting the user can be performed to match the search; for example, if a user submits a query via email, a reply email can be generated to indicate missing content, or improper syntax, etc., and if a user enters a query in a query interface application, a pop-up message may appear, or an error/indication may appear within the query interface. If the user is prompted, 530, the system may be able to determine the missing information/content from the user, 532, for example, by the user providing missing information or correcting the entered query. If the user is not prompted, 530, the system may determine from a work/environmental context what information is missing, 522. In one embodiment, a context can be determined (or at least an algorithm run that takes a "best guess" at the context), for example, by a type of activity being performed, and perhaps a location of a cursor (for example, if the cursor is in a particular field of the activity, the determination might be to search for an object of the type that should go into the field).

If the query is complete, 520, or completed, 522-534, the parser can determine one or more appropriate services to perform the search, 536. A formatter may format the information from the query according to a protocol, standard, expectation, etc., of the one or more services. For example, a service may desire to have information organized in a particular order, and with particular fields. The formatter can thus format the query for the one or more selected services, 538, and send the query to the services selected, 540.

The services perform a search and return one or more results (which may be a null result set). The services return the results to the formatter, which receives the results, 542. The formatter can then format the results for display in a user device, 544. In an implementation where multiple device types are supported, the formatting may be important to provide the best visualization and usability of the returned objects to provide value in the searched results. The results can then be displayed in a user device, 546.

Besides what is described herein, various modifications may be made to the disclosed embodiments and implementations of the invention without departing from their scope. Therefore, the illustrations and examples herein should be construed in an illustrative, and not a restrictive sense. The scope of the invention should be measured solely by reference to the claims that follow.

## Claims

1. A computer-implemented method in an enterprise comprising:
receiving query content to request identification of one or more business objects related to the query content;
parsing the query content with a parser to determine an object classification associated with the query content;
determining, based at least in part on the object classification, an enterprise service with which to identify one or more business objects related to the query content; and
displaying results of business objects, if any, identified by the enterprise service, including a link to one or more identified business objects related to the query content.

2. The computer-implemented method of claim 1, wherein receiving the query content comprises receiving the query content as a user query entered into a user query interface.

3. The computer-implemented method of claim 2, wherein the user query includes a syntax of: action type, business object type, and argument.

4. The computer-implemented method of claim 3, wherein the user query action type comprises one or more of search, subscribe, open, or create.

5. The computer-implemented method of anyone of claims 2 to 4, further comprising:
providing query formatting to the user query interface to provide proper syntax to the user query.

6. The computer-implemented method of anyone of claims 2 to 5, wherein the object classification comprises a classification selectable by the user in the user query interface.

7. The computer-implemented method of claim 6, wherein the selectable classification comprises a classification selectable based at least in part on a work context from which the query content is received.

8. The computer-implemented method of anyone of the preceding claims, wherein the query content comprises query content from any of multiple different device-types, and wherein receiving the query content further comprises:
supporting multi-channel queries to enable servicing an identification request received from any of the multiple different device-types.

9. The computer-implemented method of claim 8, wherein displaying the results of the identified business objects further comprises:
determining a formatting of the results to display in a device of the device-type of the received query content.

10. The computer-implemented method of anyone of the preceding claims, wherein receiving the query content comprises:
performing a search in a background of an active work environment, the query content determined from a context of the active work environment.

11. The computer-implemented method of anyone of the preceding claims, wherein the enterprise service comprises an enterprise service of a local enterprise of which the user is a part.

12. The computer-implemented method of anyone of the preceding claims, wherein the enterprise service comprises an enterprise service of an enterprise remote with respect to a local enterprise of which the user is a part.

13. The computer-implemented method of claim 12, wherein the remote enterprise service comprises an enterprise service of an enterprise that participates in a grid trading network with the local enterprise.

14. The computer-implemented method of anyone of the preceding claims, wherein the enterprise service comprises a Web service to provide accessibility to the Internet from within the enterprise.

15. The computer-implemented method of anyone of the preceding claims, wherein determining the enterprise service with which to identify the one or more business objects further comprises:
identifying multiple enterprise services with which to identify the one or more business objects related to the query content; and
requesting the multiple enterprise services to identify one or more business objects related to the query content.

16. The computer-implemented method of anyone of the preceding claims, wherein displaying the results of the identified business objects further comprises:
formatting the results based at least in part on the object classification.

17. The computer-implemented method of anyone of the preceding claims, wherein displaying the results of the identified business objects further comprises:
returning a business object of a different classification from the business object of the user request, the returned business object of the different classification related to the business object of the user request.

18. An article of manufacture comprising a machine accessible medium having content stored thereon to provide instructions to cause a machine to perform operations including:
receiving a user query at a user query interface, the user query to request identification of one or more business objects of a specified business object type, the one or more business objects related to an argument of the user query;
parsing the user query to determine an enterprise service with which to identify one or more business objects related to the argument;
formatting results of business objects identified by the enterprise service based at in part on a context in which the user query was received; and
displaying the formatted results, including a link to one or more identified business objects related to the argument.

19. The article of manufacture of claim 18, wherein the instructions to cause receiving the user query include instructions to cause:
receiving the user query via an electronic messaging service message.

20. The article of manufacture of claim 19, wherein the electronic messaging service message includes the user query with the syntax of: action type, business object type, and argument in a subject field.

21. The article of manufacture of anyone of claims 18 to 21, wherein the instructions to cause receiving the user query include instructions to cause:
receiving the user query via the release of a graphical element into the user query interface as the result of a drag-and-drop operation.

22. An apparatus for searching comprising:
a network interface circuit to couple to an enterprise network;
a parser coupled to the network interface circuit and to the search query interface, to receive the user query, parse the user query, associate the user query with an object type, and forward the parsed query to an enterprise service associated with the object type, the enterprise service to search for a structured business object related to content indicated in the user query; and
a formatter, coupled to the network interface to receive a result from the enterprise service and determine a format with which to display the result to a user, including a link to the business object represented by the result.

23. The apparatus of claim 22, the parser to parse the user query and associate the user query with an object type further comprises the parser to perform a string parse on the user query and perform a term match with known key words.

24. The apparatus of claim 22 or 23, the formatter to determine the format further comprises the formatter to determine the format based at least in part on a context of the user query.

25. A computer-implemented system for searching comprising:
a search query interface to receive a user query, the user query to request a search for a structured business object related to content indicated in the user query;
a network interface circuit to couple the search query interface to an enterprise network;
a parser coupled to the network interface circuit and to the search query interface, to receive the user query, parse the user query, associate the user query with an object type, and forward the parsed query to an enterprise service associated with the object type, the enterprise service to search for a structured business object related to content indicated in the user query; and
a formatter, coupled to the network interface to receive a result from the enterprise service and determine a format with which to display the result to a user, including a link to the business object represented by the result.

26. The computer-implemented system of claim 25, the search query interface to receive the user query further comprises the search query interface to provide selectable object types for a user to select in conjunction with the user query.

27. The computer-implemented system of claim 25 or 26, the search query interface to provide the selectable object types further comprises the search query interface to restrict the selectable object types based at least in part on a work context of the environment from which the user query is received.
